(19) Europäisches Patentamt
European Patent Office
Office européen des brevets

(11) Publication number: **0 508 467 A2**

(12) **EUROPEAN PATENT APPLICATION**

(21) Application number: **92106268.3**

(51) Int. Cl.[5]: **C04B 35/00**

(22) Date of filing: **10.04.92**

(30) Priority: **12.04.91 US 684120**

(43) Date of publication of application:
**14.10.92 Bulletin 92/42**

(84) Designated Contracting States:
**BE DE ES FR GB IT**

(71) Applicant: **UNION CARBIDE CHEMICALS & PLASTICS TECHNOLOGY CORPORATION**
**39 Old Ridgebury Road**
**Danbury, Connecticut 06817-0001(US)**

(72) Inventor: **Verma, Surendra Kumar**
**5341 Shadowbrook Road**
**Charleston, West Virginia 25313(US)**

(74) Representative: **von Hellfeld, Axel, Dr. Dipl.-Phys. et al**
**Wuesthoff & Wuesthoff Patent- und Rechtsanwälte Schweigerstrasse 2**
**W-8000 München 90(DE)**

(54) **Ceramic compositions and processes for the manufacture and use thereof.**

(57) This invention relates to ceramic compositions comprising a ceramic material such as alumina, clay, a dispersant and one or more block polymers characterized by an ABCBA structure as a binder, and to ceramics produced therefrom. This invention also relates to processes for the production of ceramic compositions and for the manufacture of ceramics. By using one or more block polymers characterized by an ABCBA structure as a binder, polymers of relatively high molecular weight can be used, thereby giving good green strength in the greenware, while still keeping the slurry viscosity relatively low. The ceramic compositions exhibit good green density, good mold release and gentle burnout character.

EP 0 508 467 A2

## Brief Summary of the Invention

### Technical Field

This invention relates to ceramic compositions and to processes for the manufacture and use thereof. More specifically, this invention relates to a ceramic composition which uses one or more block polymers characterized by an ABCBA structure as a binder; this ceramic composition allows production of a slurry of relatively low viscosity, while giving good green strength in the bonded ceramic material prior to firing and also good mold release and gentle burnout character.

## Background of the Invention

It is known to form a ceramic article by making up an aqueous slurry comprising water, a ceramic material such as aluminum, clay, as dispersed in a binder. The slurry can then be spray dried so that it emerges in the form of substantially spherical granules, or otherwise formed into a desired shape. The resultant spray dried powder can then be dry extruded or molded to give a desired shape. Organic solvents such as methanol, ehtanol and the like can be used in place of water for those ceramic materials which degrade in contact with water. Alternatively, the slurry can be poured into a mold and allowed to settle, thereby producing a coherent mass of ceramic material together with an upper layer of separated water, which is then removed by decantation. The coherent article produced is known as greenware. Such greenware is normally subjected to further forming operations, such as drilling to produce the final desired shape of the article, before the greenware is oven-fired at a very high temperature to produce the final ceramic article.

Such a manufacturing process imposes stringent demands upon the binder used. The slurry formed in the first step of the process is required to have a high solids content but a relatively low viscosity in order to assist the spray-drying process. The spray-dried powder is desirably self-lubricating, so that no additional lubricant is needed during extrusion or molding. The binder is desirably such that no mold release compounds are needed during molding. It is desirable that the binder introduce "spring-back" into the greenware so that the greenware can readily be extracted from molds or tooling of complicated forms. It is also desirable that the binder has good plasticity to provide good compaction leading to high green density. The greenware produced should have a high green density, a high green strength, and not be unduly brittle, since brittle greenware is difficult to machine and tends to chip. Finally, the binder chosen should be one which gives rapid burn-off during the final oven firing, and is non-reactive with the wide range of ceramic materials used commercially.

No existing ceramic binder adequately meets all these exacting requirements. One known binder is polyvinyl alcohol. Polyvinyl alcohol gives greenware with a high green strength and is useable with many ceramic materials. However, polyvinyl alcohol does not produce self-lubricating properties in the spray-dried powder so that, in order to maintain maximum green density, an additional lubricant is needed. In addition, polyvinyl alcohol-bound ceramic compositions give very little spring-back when pressed, which leads to difficulties in trying to extract parts from certain types of tooling. When dry and isostatic tooling are used, polyvinyl alcohol-bound ceramic compositions have a tendency to stick to the mold, so that a mold release compound is needed during pressing. Finally, greenware produced using a polyvinyl alcohol binder is hard and brittle and consequently difficult to machine since it tends to chip. Polyvinyl alcohol also has the minor disadvantage that it must be dissolved in water before use.

Another type of binder used commercially in the manufacture of ceramic articles is poly(oxyalkylene)-glycol polymers. Most prior art binders of this type are essentially linear poly(oxyalkylene)glycol polymers, usually made by polymerization of ethylene and/or propylene oxide; the commercially preferred linear poly-(oxyalkylene)glycol polymer binder is CARBOWAX® poly(oxyalkylene)glycol PEG 20M manufactured by Union Carbide Chemicals and Plastics Company Inc., Danbury, Connecticut. Poly(oxyalkylene)glycol binders, such as CARBOWAX® poly(oxyalkylene)glycol PEG 20M, have the advantages of giving self-lubricating properties to the spray-dried powder, thereby eliminating the need for an additional lubricant, and giving greenware with high green density and medium green strength. No mold release compounds are needed during molding and the binder produces adequate spring back. In addition, greenware formed using this type of binder is not brittle so that the greenware can be machined without chipping, although the only moderate green strength of the greenware can present certain problems. Finally, poly(oxyalkylene)glycol binders burn off rapidly and cleanly during oven firing.

The green strength of greenware produced using poly(oxyalkylene)glycol binders can be improved by adding polyvinyl alcohol as a co-binder, typically in an amount of 10-20% by weight of the poly-

(oxyalkylene)glycol polymer. The addition of polyvinyl alcohol as a co-binder does increase the green strength of the products, but has the disadvantage of making the greenware somewhat more brittle.

The main disadvantages of the prior art poly(oxyalkylene)glycol polymers are their effect upon the viscosity of the slurry. In order to produce good binding properties in the greenware, it is necessary to use poly(oxyalkylene)glycol binders having a relatively high molecular weight; CARBOWAX® poly(oxyalkylene)-glycol PEG 20M has a molecular weight of about 20,000. Unfortunately, as the molecular weight of the poly-(oxyalkylene)glycol polymers rises, so does the viscosity of the slurry solution. In practice, a compromise has to be made between the need to use a high molecular weight polymer in order to improve greenware properties, and the need to keep molecular weight low in order to avoid undue elevation of the viscosity of the slurry. Moreover, in many cases, this compromise requires lowering the solids content of the slurry in order to keep its viscosity within acceptable limits. Such lowering of the solids content of the slurry is undesirable in that it makes the slurry more difficult to dry during the spray-drying step.

It might be thought the viscosity problems encountered with linear poly(oxyalkylene)glycol polymer binders could be overcome by using a star poly(oxyalkylene)glycol polymer binder. Star polymers comprise a number of molecular chains radiating from a central "hub". Such polymers may be produced either by initiating polymerization of a monomer with a molecule having a functionality of at least three; the residue of this polyfunctional molecule forms the hub of the star polymer. Alternatively, linear poly(oxyalkylene)glycol polymers having the molecular weight desired for the arms of the star polymer may be prepared, and then linked together using an appropriate polyfunctional molecule. At low molecular weights, the star polymers do indeed have viscosities lower than comparable linear polymers. However, as the length of the branches are increased to produce weights within the range used in ceramic binders, chain entanglement occurs between branches, resulting in viscosities higher than those for corresponding linear polymers - see Kurmar, N. Ganesh, J. Polymer Science, Macromolecular Reviews, 15, 255 (1980). Accordingly, the use of star polymers does not solve the viscosity problems encountered when using linear poly(oxyalkylene)glycol polymers as binders in ceramic compositions.

Accordingly, there is a need for a polymeric binder for ceramic compositions which does not produce excessively high viscosities in the slurry but adequately fulfills the other requirements for such binders discussed above, and this invention provides compositions and processes using such a binder.

## Disclosure of the Invention

This invention relates in general to a ceramic composition comprising a ceramic material, clay, a dispersant and one or more block polymers characterized by an ABCBA structure as a binder.

This invention also relates in general to a process for producing a bonded mass of ceramic material, this process comprising forming an aqueous slurry comprising water, a ceramic material, clay, a dispersant and a binder, the binder comprising one or more block polymers characterized by an ABCBA structure . The water content of the slurry is then reduced until the bonded mass of ceramic material is formed.

This invention relates in particular to a process for producing a bonded mass of ceramic material which comprises:

(i) preparing an alkoxylation product by contacting an organic compound having at least one active hydrogen with an alkylene oxide in the presence of a catalytically effective amount of an alkoxylation catalyst under alkoxylation conditions;

(ii) preparing a mixture of one or more block polymers characterized by an ABCBA structure by contacting said alkoxylation product with an epoxide in the presence of a catalytically effective amount of a catalyst;

(iii) forming an aqueous slurry comprising water, a ceramic material, clay, a dispersant and the mixture of one or more block polymers characterized by an ABCBA structure as a binder; and

(iv) reducing the water content of the slurry until the slurry forms the bonded mass of ceramic material.

This invention also relates in particular to a process for producing a ceramic article which comprises:

(i) preparing an alkoxylation product by contacting an organic compound having at least one active hydrogen with an alkylene oxide in the presence of a catalytically effective amount of an alkoxylation catalyst under alkoxylation conditions;

(ii) preparing a mixture of one or more block polymers characterized by an ABCBA structure by contacting said alkoxylation product with an epoxide in the presence of a catalytically effective amount of a catalyst;

(iii) forming an aqueous slurry comprising water, a ceramic material, clay, a dispersant and the mixture of one or more block polymers characterized by an ABCBA structure as a binder;

(iv) reducing the water content of the slurry until the slurry forms a bonded mass of ceramic material;

and

(v) firing the bonded mass of ceramic material at a temperature sufficient to form said ceramic article.

This invention further relates in general to a bonded mass of ceramic material produced by the above processes of this invention, and to fired ceramic articles produced by firing such bonded masses of ceramic material.

## Detailed Description

Apart from the one or more block polymers characterized by an ABCBA structure as a binder, the components of the ceramic compositions of this invention are generally similar to those used in prior art compositions. Thus, the ceramic compositions of this invention comprise the one or more block polymers characterized by an ABCBA structure as a binder, a ceramic material, preferably alumina, a clay and a dispersant. The dispersant is conveniently a lignosulfonate, while appropriate types of clay for use in particular ceramic compositions will be known to those skilled in the art.

Typically, a ceramic composition of this invention will comprise, on a solids basis, 80 to 90 percent by weight of ceramic material, 0.1 to 10 percent by weight of the combined weights of the clay and dispersant, and 1 to 10 percent by weight of the one or more block polymers characterized by an ABCBA structure as a binder. Generally, on a solids basis, the ceramic compositions of this invention will comprise 88 to 97 percent by weight of the ceramic material, 0.2 to 7 percent by weight of the combined weight of the clay and dispersant and 2 to 8 percent by weight of the one or more block polymers characterized by an ABCBA structure as a binder. If it is desired to increase the green strength of greenware produced from the ceramic compositions of this invention and some increase in brittleness is acceptable, polyvinyl alcohol may be added to the ceramic compositions as a co-binder. When polyvinyl alcohol is added, it may be added in an amount of from 0.2 to 3 percent by weight of the composition.

This invention extends to the above described ceramic compositions in all physical forms, and in particular to such compositions in the form of spray-dried powders and aqueous slurries. Such aqueous slurries probably have a total solids content of 60 to 85 percent by weight. As already noted, it is one of the important advantages of the ceramic compositions of this invention that the reduced viscosity produced by the use of the one or more block polymers characterized by an ABCBA structure as binders enables the ceramic compositions to have somewhat higher solids contents than prior art compositions using linear poly(oxyalkylene)glycol polymer binders while still keeping the viscosity of the slurry within acceptable limits.

In the process of this invention, the slurry typically has a viscosity at 25°C not in excess of about 10,000 centipoise. Forming of the slurry into the desired shape may be achieved by spray-drying the slurry, and thereafter extruding or molding the resultant spray-dried powder in the conventional manner. The bonded mass of ceramic material may also be prepared by pouring the slurry into a mold and allowing it to remain in the mold until the solids in the slurry settle, thereby producing the bonded mass of ceramic material. The water which has separated from the slurry as a result of the settling can then be poured off and the bonded mass removed from the mold. For experimental purposes, a layer of the slurry may be spread on a substrate, and while in contact with the substrate, exposed to a temperature or vacuum (on a porous substrate) sufficient to reduce its water content. Following this dehydration, the substrate is removed so that the bonded mass comprises a lamina of ceramic material. Such a lamina can then be punched, cut or otherwise formed to produce appropriately shaped greenware ready for oven firing.

Finally, of course, to form the finished ceramic article using the process of this invention, the greenware produced from the slurry must be oven fired. Firing techniques for use in the process of this invention are the same as those conventionally employed for the firing of ceramic compositions and thus not be described in detail since they will be familiar to those skilled in the art. The one or more block polymers characterized by an ABCBA structure used in the compositions and processes of this invention give good burn off similar to that produced by the prior art linear poly(oxyalkylene)glycol polymer binders.

As indicated above, the ceramic compositions of this invention are comprised of one or more block polymers or copolymers characterized by an ABCBA structure. In particular, the block polymers characterized by an ABCBA structure are comprised of:

(1) A blocks or segments which can be represented as follows:

$[R_{20}-]$

wherein $R_{20}$ is the same or different and is an organic residue of an organic compound having at least one active hydrogen; and wherein the A blocks represent in general from about 10 weight percent or less

to about 40 weight percent or greater, generally from about 15 to about 35 weight percent, of the weight of the ABCBA polymer;

(2) B blocks or segments which can be represented as follows:

$[-CHR_{21} - CHR_{22}O-]_m$

wherein $R_{21}$ and $R_{22}$ are the same or different and are hydrogen or alkyl (including hydroxy- and halo-substituted alkyl) of, for example, 1 to 28 carbons and m is an integer of at least 1, say, 1 to about 60 or greater; and wherein the B blocks represent in general from about 10 weight percent or less to about 80 weight percent or greater, generally from about 25 to about 75 weight percent, of the weight of the ABCBA polymer; and

(3) a C block or segment which can be represented as follows:

$[-R_{23}-]$

wherein $R_{23}$ is an organic residue of an epoxide containing two or more epoxy groups; and wherein the C block represents in general from about 1 to about 20 weight percent or greater, generally from about 5 to about 15 weight percent, of the weight of the ABCBA polymer.

Each terminal oxy moiety, i.e., -O-, of the B block is individually connected to the terminal alkylene moiety, i.e., $-CH_2-$, of the C block through a monovalent bond to form an oxyalkylene group, i.e., $-OCH_2-$. Each terminal alkylene moiety, i.e., $-CHR_{21}-$, of the B block is individually connected to the terminal oxy moiety, i.e., -O-, of the A block through a monovalent bond to form an oxyalkylene group, i.e., $-OCHR_{21}-$.

The block polymers characterized by an ABCBA structure which are useful in this invention have an average molecular weight of from about 500 to about 10,000, generally from about 1,500 to about 7,500. For purposes of this invention, the average molecular weight should be sufficient to provide solid block polymers characterized by an ABCBA structure at room temperature.

The A blocks or segments can be the same or different and represent an organic residue of an organic compound having at least one active hydrogen. Suitable organic compounds having active hydrogens include alcohols (mono-, di- and polyhydric alcohols), phenols, carboxylic acids (mono-, di- and polyacids), and amines (primary and secondary). The organic compounds may contain 1 carbon to about 100 or 150 carbons (in the case of polyol polymers) and may contain aliphatic and/or aromatic structures. Typically, the organic compounds are monohydric alcohols having 1 to about 30 carbon atoms. The organic compounds having active hydrogens can be the products of hydroformylation/hydrogenation reactions.

In those instances where the A blocks or segments represent an organic residue of an organic compound having 2 or more active hydrogens, e.g., di- and polyhydric alcohols, the block polymers characterized by an ABCBA structure can be at least partially crosslinked. However, for purposes of this invention, it is desirable that the degree of crosslinking does not exceed that which would lead to a suitable low viscosity product in the molten state.

Suitable alcohols are primary and secondary monohydric alcohols which are straight or branched chain such as methanol, ethanol, propanol, pentanol, hexanol, heptanol, octanol, nonanol, decanol, undecanol, dodecanol, tridecanol, tetradecanol, pentadecanol, hexadecanol, octadecanol, isopropyl alcohol, 2-ethylhexanol, sec-butanol, isobutanol, 2-pentanol, 3-pentanol and isodecanol. Particularly suitable alcohols are linear and branched primary alcohols (including mixtures) such as produced by the Ziegler oligomerization/oxidation process and the "Oxo" reaction of $C_3$ to $C_{20}$ olefins. The alcohols may also be cycloaliphatic such as cyclopentanol, cyclohexanol, cycloheptanol, cyclooctanol, as well as aromatic substituted aliphatic alcohols such as benzyl alcohol, phenylethyl alcohol and phenylpropyl alcohol. Other aliphatic structures include 2-methoxyethanol and the like. Halo-substituted alcohols and silicon-containing organic compounds having at least one active hydrogen may also be useful in this invention.

Phenols include alkylphenols of up to 30 carbons such a p-methylphenol, p-ethylphenol, p-butylphenol, p-heptylphenol, p-nonylphenol, dinonylphenol and p-decylphenol. The aromatic radicals may contain other substituents such as halide atoms.

Alcohols (polyols) having 2 or more hydroxyl groups, e.g., about 2 to 6 hydroxyl groups and have 2 to 30 carbons, include glycols such as ethylene glycol, propylene glycol, butylene glycol, pentylene glycol, hexylene glycol, neopentylene glycol, decylene glycol, diethylene glycol, triethylene glycol and dipropylene glycol. Other polyols include glycerine, 1,3-propanediol, pentaerythritol, galactitol, sorbitol, mannitol, erythritol, trimethylolethane and trimethylolpropane.

The B blocks or segments can be the same or different and represent oxyalkylene units. The alkylene oxides which provide the oxyalkylene units in the alkoxylated products include alkylene oxides such as

ethylene oxide, propylene oxide, 1,2-butylene oxide, 2,3-butylene oxide, 1,2- and 2,3-pentylene oxide, cyclohexylene oxide, 1,2-hexylene oxide, 1,2-octylene oxide, and 1,2-decylene oxide; epoxidized fatty alcohols such as epoxidized soybean fatty alcohols and epoxidized linseed fatty alcohols; aromatic epoxides such as styrene oxide and 2-methylstyrene oxide; and hydroxy- and halogen-substituted alkylene oxides such as glycidol, epichlorhydrin and epibromhydrin. The preferred alkylene oxides are ethylene oxide, propylene oxide or mixtures thereof. For purposes of this invention, the block polymers characterized by an ABCBA structure contain sufficient ethylene oxide to impart water solubility thereto.

The selection of the organic residue of an organic compound having at least one active hydrogen and the oxyalkylene moieties is based on the particular properties desired in the resulting alkoxylation product. Advantageously, narrow distributions of alkoxylate species may be obtained using a wide variety of compounds having active hydrogens, especially monohydric alcohols, which provide desirable alkoxylation products for use in the manufacture of ceramic compositions. Because of the narrow alkoxylate species distribution of the alkoxylation product, these especially attractive alkoxylation products may provide a highly desirable balance of performance properties in ceramic compositions. Hence, the organic compound often comprises a monohydric alcohol of about 8 to 20 carbons and the alkylene oxide comprises ethylene oxide.

In a typical embodiment, the A and B blocks or segments together represent the residue of fatty alcohol ethoxylates. The fatty alcohol ethoxylates, some of which are known under such nonionic surfactant tradenames as NEODOL®, ALFONIC®, TERGITOL®, etc., are manufactured by ethoxylation of linear or branched $C_{10}$-$C_{16}$ saturated alcohols; they are produced over a molecular weight range of about 250 to about 3,000. It is in the production of these and other performance type, premium quality ethoxylates that certain calcium-containing catalysts described hereinbelow offer advantages relative to the usual homogeneous ethoxylation catalysts such as sodium hydroxide, potassium hydroxide and the like.

The C block or segment represents an organic residue of an epoxide containing two or more epoxy groups. The epoxy groups can be terminal epoxy groups or internal epoxy groups. Illustrative epoxides include glycidyl type epoxides, cycloaliphatic epoxides, aliphatic epoxides, epoxy cresol novolac resins, epoxy phenol novolac resins, polynuclear phenol-glycidyl ether-derived resins, aromatic and heterocyclic glycidyl amine resins, hydantoin epoxy resins, and the like, and mixtures thereof. The selection of the epoxide is based on the particular properties desired in the resulting mixture of block polymers characterized by an ABCBA structure. Monomers and oligomers of diepoxides are preferred for use in this invention. Also, hindered diepoxides are preferred for use in this invention since unhindered diepoxides may lead to unsuitable high viscosity products in the molten state.

The glycidyl-type epoxides are preferably diglycidyl ethers of bisphenol A which are derived from bisphenol A and epichlorohydrin and have the following formula:

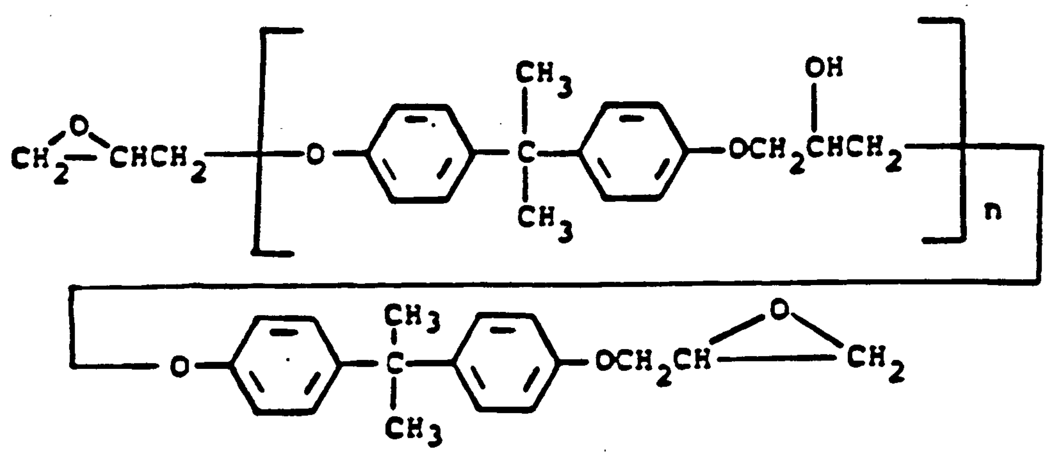

wherein n is an integer of from 0 to about 20 or greater, preferably n is an interger of from 0 to about 3.

Suitable cycloaliphatic epoxides for purposes of this invention are those having an average of two or more epoxy groups per molecule. Illustrative of suitable cycloaliphatic epoxides are the following:

FORMULA I

Diepoxides of cycloaliphatic esters of dicarboxylic acids having the formula:

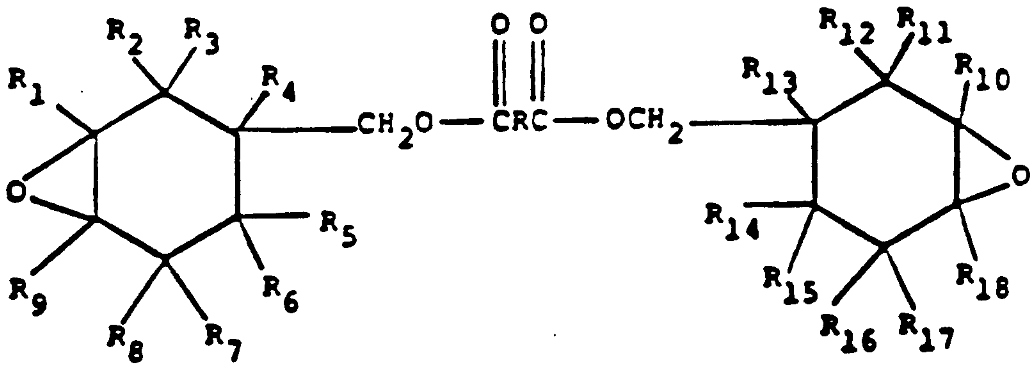

wherein $R_1$ through $R_{18}$ are the same or different and are hydrogen or alkyl radicals generally containing 1 to 9 carbon atoms inclusive, preferably containing 1 to 3 carbon atoms inclusive, as for example, methyl, ethyl, n-propyl, n-butyl, n-hexyl, 2-ethylhexyl, n-octyl, n-nonyl and the like; R is a valance bond or a divalent hydrocarbon radical generally containing 1 to 20 carbon atoms inclusive, preferably containing 4 to 6 carbon atoms inclusive, as for example, alkylene radicals such as trimethylene, tetramethylene, pentamethylene, hexamethylene, 2-ethylhexamethylene, octamethylene, nonamethylene, hexadecamethylene and the like, and cycloaliphatic radicals such as 1,4-cyclohexane, 1,3-cyclohexane, 1,2-cyclohexane and the like.

Suitable epoxides falling within the scope of Formula I are those wherein $R_1$ through $R_{18}$ are hydrogen and R is alkylene containing 4 to 6 carbon atoms. Among specific diepoxides of cycloaliphatic esters of dicarboxylic acids are the following: bis(3,4-epoxycyclohexylmethyl)oxalate; bis(3,-4-epoxycyclohexylmethyl)adipate; bis(3,4-epoxy-6-methylcyclohexylmethyl)adipate; bis(3,4-epoxycyclohexylmethyl)pimelate; and the like. Other suitable compounds are described, for example, in U.S. Patent No. 2,750,395.

FORMULA II

3,4-Epoxycyclohexylmethyl-3,4-epoxycyclohexane carboxylates having the formula:

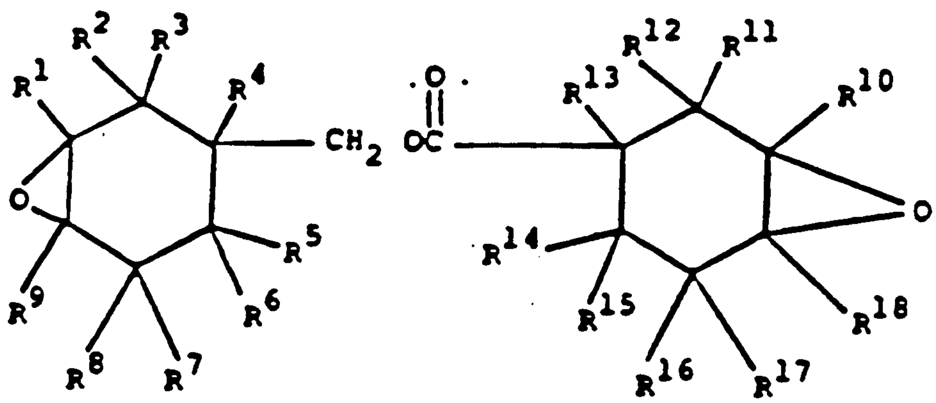

wherein $R^1$ through $R^{18}$ are as defined for $R_1$ to $R_{18}$ in Formula I. Particularly desirable compounds are those wherein $R^1$ through $R^{18}$ are hydrogen.

Among specific compounds falling within the scope of Formula II are the following: 3,4-epoxycyclohexylmethyl-3,4-epoxycyclohexane carboxylate; 3,4-epoxy-1-methylcyclohexylmethyl-3,4-epoxy-1-methylcyclohexane carboxylate; 6-methyl-3,4-epoxycyclohexylmethyl-6-methyl-3,4-epoxycyclohexane carboxylate; 3,4-epoxy-3-methylcyclohexylmethyl-3,4-epoxy-3-methylcyclohexane carboxylate; and 3,4-epoxy-5-methylcyclohexylmethyl-3,4-epoxy-5-methylcyclohexane carboxylate. Other suitable compounds are described, for example, in U.S. Patent No. 2,890,194.

FORMULA III

Diepoxides having the formula:

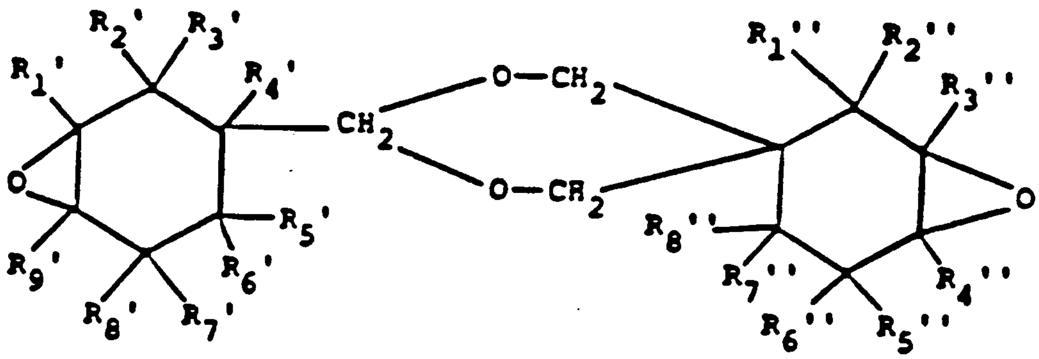

wherein the R single and double primes, which can be the same or different, are monovalent substituents such as hydrogen, halogen, i.e, chlorine, bromine, iodine or fluorine, or monovalent hydrocarbon radicals or radicals as further defined in U.S. Patent No. 3,318,822. Suitable compounds are those wherein all the R single and double primes are hydrogen.

Other suitable cycloaliphatic epoxides are the following:

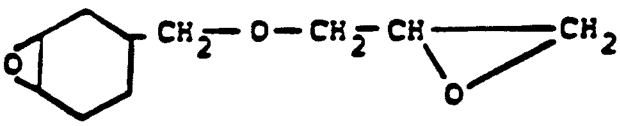

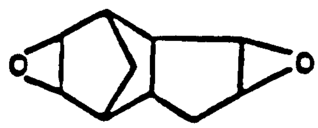

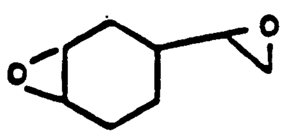

or

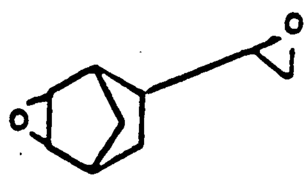

and the like.

Other suitable cycloaliphatic epoxides are the following:

3,4-epoxycyclohexylmethyl-3,4-epoxycyclohexane carboxylate

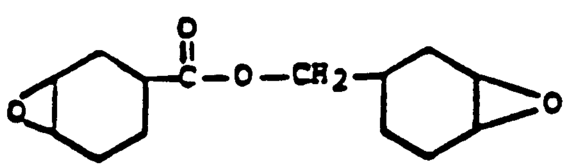

bis(3,4-epoxycyclohexylmethyl)adipate

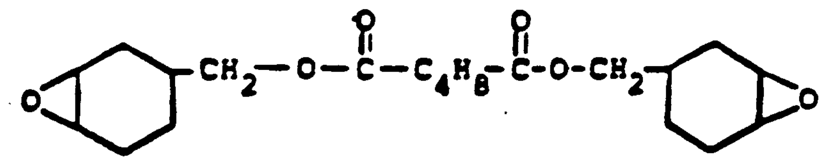

2-(3,4-epoxycyclohexyl-5,5-spiro-3,4-epoxy)cyclohexane-meta-dioxane

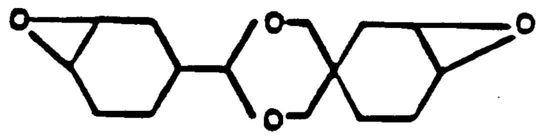

or mixtures thereof.

Epoxides with six membered ring structures may also be used, such as diglycidyl esters of phthalic acid, partially hydrogenated phthalic acid or fully hydrogenated phthalic acid. A representative diglycidyl ester of phthalic acid is the following:

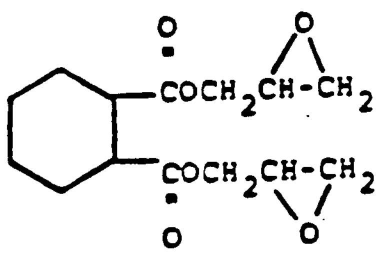

Diglycidyl esters of hexahydrophthalic acids are suitable for use in this invention.

The epoxy cresol novolac resins are multifunctional, solid polymers characterized by low ionic and hydrolyzable chlorine impurities, high chemical resistance, and thermal performance.

The epoxy phenol novolac resins are generally of the following formula:

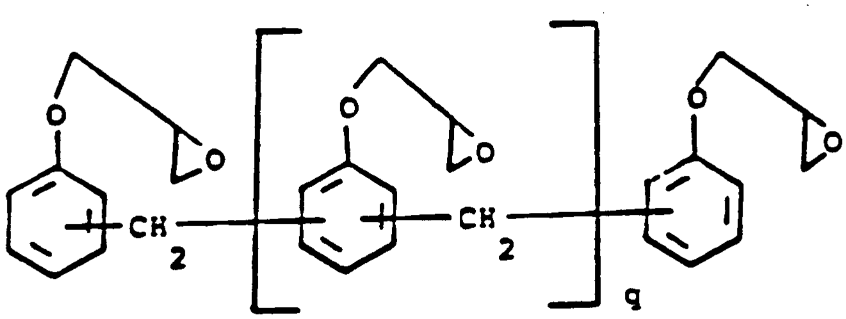

wherein q is an integer of from 0 to about 20 or greater, preferably q is an integer of from 0 to about 3.

The polynuclear phenol-glycidyl ether-derived resins are generally of the formula:

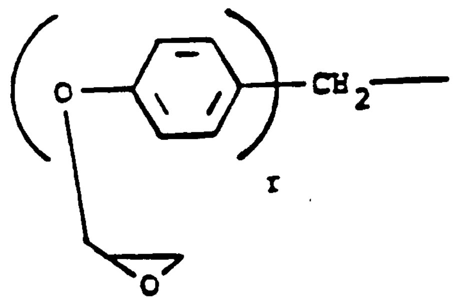

wherein r is an integer of 2.

Among the aromatic and heterocyclic glycidyl amine resins which may be included herein are the following: tetraglycidylmethylenedianiline derived resins of the following formula:

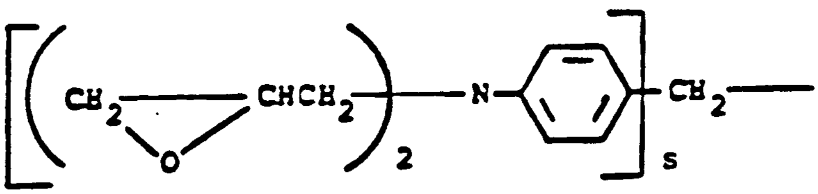

wherein s is an integer of 2; triglycidyl-p-aminophenol derived resins, triazine based resins and hydantoin epoxy resins of the formula:

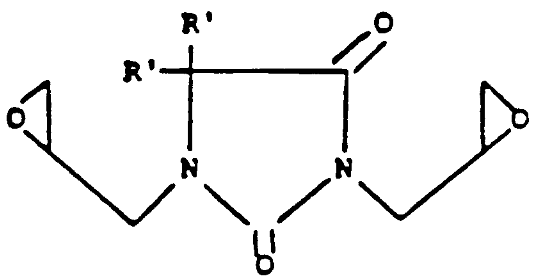

wherein R' is methyl; and heterocyclic diglycidyl amine resins of the formula:

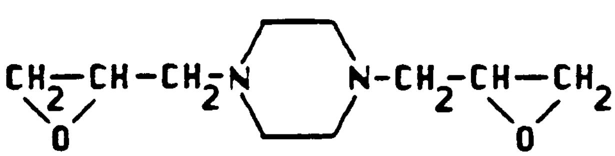

In a preferred embodiment, the organic diepoxy compounds suitable for use in this invention are those composed of carbon, hydrogen and oxygen atoms, the oxygen being present in the form of oxirane and, optionally, ether and/or ester arrangements. The preferred diepoxy compounds include, for example, the bis(epoxyalkyl)cycloalkanes; the bis(epoxycycloalkyl)ethers, e.g, bis(2,3-epoxycyclopentyl)ether; the bis-(epoxyalkoxy)benzenes, e.g., the bis(2,3-epoxypropoxy)benzenes; the bis(epoxyalkoxyphenyl)alkanes, e.g., the diglycidyl ether of 2,2-bis(4-hydroxyphenyl)propane; 3,4-epoxycyclohexylmethyl 3,4-epoxycyclohexanecarboxylate; 4-vinylcyclohexene diepoxide; and the like. The di(epoxyalkyl)diethers of dihydric phenols wherein the epoxyalkyl moiety contains from 2 to 20 carbon atoms are most preferred, especially the diglycidyl diether of 2,2-bis(4-hydroxyphenyl)propane, of hydroquinone, of biphenol, and the like. By the term "dihydric phenol" as used herein is meant that each of the two phenolic hydroxyl groups (-OH) is

directly bonded to the same or different benzenoid nucleus.

The block polymers characterized by an ABCBA structure can comprise from about 1 to about 25 weight percent or greater, preferably from about 1 to about 10 weight percent, of the total weight of the ceramic composition. The amount of block polymers characterized by an ABCBA structure employed in the ceramic compositions of this invention can vary widely depending on the particular properties desired in the ceramic compositions. The amount of block polymers characterized by an ABCBA structure employed in the ceramic compositions of this invention should be sufficient to at least partially impart to the ceramic slurry compositions a viscosity of no greater than about 10,000 centipoise at a temperature of 25° C.

The one or more block polymers characterized by an ABCBA structure can be highly beneficial for processing/forming ceramic powders. These polymers are of amorphous texture and can offer excellent slurry preparation and spray drying character. In addition, these polymers can impart excellent granule compaction properties, superior mold release and green strength in both oxide and non-oxide powder compacts. These polymers can be used in aqueous media or organic solvents and can be removed effectively under controlled thermal conditions (thermal burnout) prior to the powder sintering. The burn-out behavior of these polymers may be more gradual than for conventional poly(oxyalkylene)glycol polymers and may be extended over a temperature range of from about 200° C to about 400° C. These polymers can be compatible with other poly(oxyalkylene)glycol polymers and polymers like polyvinyl alcohol and can contain low ash.

As indicated above, this invention relates to a process for producing a bonded mass of ceramic material which comprises:

(i) preparing an alkoxylation product by contacting an organic compound having at least one active hydrogen with an alkylene oxide in the presence of a catalytically effective amount of an alkoxylation catalyst under alkoxylation conditions;

(ii) preparing a mixture of one or more block polymers characterized by an ABCBA structure by contacting said alkoxylation product with an epoxide in the presence of a catalytically effective amount of a catalyst;

(iii) forming an aqueous slurry comprising water, a ceramic material, clay, a dispersant and the mixture of one or more block polymers characterized by an ABCBA structure as a binder; and

(iv) reducing the water content of the slurry until the slurry forms the bonded mass of ceramic material.

The alkoxylation products prepared in step (i) above comprise alkoxylation species that can be represented by the formula:

$$R_{20}[(CHR_{21} - CHR_{22}O)_mH]_t$$

wherein $R_{20}$ is an organic residue of an organic compound having at least one active hydrogen as described above, t is an integer of at least 1 up to the number of active hydrogens contained by the organic compound, $R_{21}$ and $R_{22}$ may be the same or different and can be hydrogen and alkyl (including hydroxy- and halo-substituted alkyl) of, for example, 1 to 28 carbons as described above, and m is an integer of at least 1, say, 1 to about 60 as described above.

The alkoxylation is conducted using a catalytically effective amount of an alkoxylation catalyst, e.g., about 0.001 to 10, often about 0.5 to 5, weight percent based on the weight of the starter component. The starter component is the organic compound having at least one active hydrogen with which the alkylene oxide reacts. The alkoxylation catalysts substantially retain their activities during the alkoxylation, regardless of the amount of alkylene oxide employed. Thus, the amount of alkoxylation catalyst can be based on the amount of starter provided to the alkoxylation zone and not the degree of alkoxylation to be effected.

A wide variety of alkoxylation catalysts are suitable for use in the process of this invention. The catalyst of choice will depend on whether an alkoxylation product having a narrow distribution or conventional distribution of alkoxylate species is desired. In a preferred embodiment for obtaining alkoxylation products having a narrow distribution of alkoxylate species, suitable alkoxylation catalysts include, for example, calcium-containing catalysts using calcium oxide or calcium hydroxide as sources of the catalytically active calcium, calcium-containing catalysts modified with a divalent or polyvalent oxyacid or metal salt of an oxyacid, calcium sulfate, modified calcium-containing bimetallic or polymetallic catalysts, organic polymer-supported calcium-containing catalysts, modified Group IIIB metal-containing bimetallic or polymetallic catalysts, modified Group IIA metal-containing bimetallic or polymetallic catalysts and other modified bimetallic and polymetallic catalysts described below. Preferred modifiers for the above alkoxylation catalysts include, for example, divalent or polyvalent oxyacids and divalent or polyvalent metal salts of oxyacids. In an embodiment for obtaining alkoxylation products having a conventional distribution of alkoxylate species, suitable alkoxylation catalysts include, for example, sodium hydroxide, potassium

hydroxide and the like.

Normally, the alkoxylation catalyst and the starter component are admixed and then the alkylene oxide is added at the reaction temperature until the desired amount of alkylene oxide has been added, then the product is neutralized and can be finished, if desired, in any procedure including stripping unreacted starter material from the product mixture, filtration or further reaction.

The temperature of the alkoxylation is sufficient to provide a suitable rate of reaction and without degradation of the reactants or reaction products. Often, the temperatures range from between about 50 ° C and 270 ° C, e.g., from about 100 ° C to 200 ° C. The pressure may also vary widely, but when low-boiling alkylene oxides such as ethylene oxide and propylene oxide are employed, a pressurized reactor is preferably used.

The alkoxylation reaction medium is preferably agitated to ensure a good dispersal of the reactants and catalyst throughout the reaction medium. Also, the alkylene oxide is usually added at a rate approximating that at which it can be reacted.

Neutralization may assist in the recovery of the catalyst from the alkoxylation product. When neutralizing, acids that may tend to form catalyst-containing gel structures or solids that clog filtering apparatus should be avoided. Conveniently, sulfuric acid, phosphoric acid, propionic acid, benzoic acid and the like are used.

Alkoxylation products useful in this invention and processes for the preparation thereof are generally known in the art. Illustrative processes for preparing alkoxylation products including suitable alkoxylation catalysts which can be useful in this invention are described, for example, in U.S. Patent No. 4,754,075, U.S. Patent No. 4,886,917, U.S. Patent No. 4,820,673, U.S. Patent Application Serial No. 251,434, filed September 30, 1988, U.S. Patent Application Serial No. 251,430, filed September 30, 1988, U.S. Patent Application Serial No. 251,433, filed September 30, 1988, U.S. Patent Application Serial No. 251,432, filed September 30, 1988, U.S. Patent Application Serial No. 251,436, filed September 30, 1988, U.S. Patent Application Serial No. 251,431, filed September 30, 1988, U.S. Patent Application Serial No. 102,939, filed September 30, 1987, U.S. Patent No. 4,453,023 and U.S. Patent No. 4,453,022, all incorporated herein by reference.

While certain alkoxylation processes described above are capable of selectively providing narrow distributions of alkoxylates with the most prevalent having as low as one mole of oxyalkylene per mole of active hydrogen site, a particular advantage exists in the ability to provide a narrow distribution at higher levels of alkoxylation. For some ceramic compositions, a relatively few alkoxylate species may provide the desired performance properties.

In accordance with step (ii) of the process of this invention, the alkoxylation product is reacted with an epoxide in the presence of a catalytically effective amount of a catalyst to produce a mixture of block polymers characterized by an ABCBA structure. The block polymers characterized by an ABCBA structure are described hereinabove.

The reaction of the alkoxylation product with an epoxide is conducted using a catalytically effective amount of a catalyst, e.g., about 0.01 to about 5, often about 0.1 to about 2, weight percent based on the weight the reactants. Suitable catalysts include any of the conventional ring-opening catalysts known in the art. Illustrative of such catalysts include, for example, potassium hydroxide, sodium hydroxide, stannous dioctanoate, cationic or protonic acid catalysts and the like.

Suitable cationic or protonic acid catalysts for use in step (ii) of the process of this invention include, for example, triflic acid, triflic acid salts, boron trifluoride etherate, boron trifluoride, methane sulfonic acid and the like. Particularly well suited catalysts are the triflic acid salts because of the high quality color (i.e., low color) characteristics of these compounds, the shelf-life characteristics of these compounds, and the wide variety of compounds that can be prepared which allows altering reaction conditions. Illustrative of these salts are diethylammonium triflate which is available as a solution from 3M Company as FC-520, triethylammonium triflate, ammonium triflate, diisopropylammonium triflate, ethyl diisopropylamnonium triflate and the like.

Normally, the catalyst and the alkoxylation product are admixed and then the epoxide is added at the reaction temperature until the desired amount of epoxide has been added, then the resulting product is neutralized and can be finished, if desired, in any procedure including filtration or further reaction.

The molar concentration ratio of alkoxylation product to epoxide in step (ii) of the process of this invention can range from about 1.5:1 to about 8:1 or higher. Higher or lower molar ratios than stoichiometric, i.e., 2:1, give block polymer products with unreacted starting materials which can affect the properties of the block polymer products. The preferred molar ratio of alkoxylation product to epoxide is 2:1.

Mixtures or blends of block polymers characterized by an ABCBA structure with unreactea or other alkoxylation products may be desirable for use in this invention. The amount of alkoxylation product

employed in combination with the block polymers characterized by an ABCBA structure can vary over a wide range, e.g., from about 1 to about 95 weight percent or greater, depending on the particular properties desired in the ceramic compositions. The amount of alkoxylation product employed in combination with the block polymers characterized by an ABCBA structure should be sufficient to at least partially impart to the ceramic slurry compositions a viscosity of no greater than about 10,000 centipoise at a temperature of 25°C. One or more alkoxylation products in combination with one or more block polymers characterized by an ABCBA structure can be suitably employed in the ceramic compositions of this invention. This invention is not to be construed as being limited in regard to the amounts of block polymers characterized by an ABCBA structure and unreacted or other alkoxylation products in mixtures or blends thereof.

The temperature of the step (ii) reaction is sufficient to provide a suitable rate of reaction without degradation of the reactants or reaction products. Often, the temperatures range from between about 50°C and 250°C, e.g., from about 100°C to 175°C. The pressure may also vary widely, but when low-boiling epoxides are employed, a pressurized reactor is preferably used.

The step (ii) reaction medium can be agitated to ensure a good dispersal of the reactants and catalyst throughout the reaction medium. Also, the epoxide is usually added at a rate approximating that at which it can be reacted.

Neutralization may assist in the recovery of the catalyst from the block polymer product mixture. When neutralizing, acids that may tend to form catalyst-containing gel structures or solids that clog filtering apparatus should be avoided. Conveniently, sulfuric acid, phosphoric acid, propionic acid, benzoic acid and the like are used.

In accordance with step (iii) of the process of this invention, an aqueous slurry comprising water, a ceramic material, clay, a dispersant and the mixture of one or more block polymers characterized by an ABCBA structure as a binder is formed by blending and stirring to obtain a uniform solution or dispersion. The resulting ceramic composition thus obtained in a liquid state has a low viscosity of from about 100 to about 10,000 centipoise, preferably a viscosity of no greater than about 10,000 centipoise at a temperature of 25°C.

Other additives which may be incorporated in conventional amounts into the ceramic compositions of this invention include, for example, preservatives, stabilizers, etc. An antifoam may be added in conventional amounts during formulation, e.g., stirring, of the ceramic compositions. When preservatives or stabilizers are used, they may include imidazolidienyl urea (0.25%-0.35%), methyl or propyl paraben (0.75%-1.0% and 0.25%-0.35%, respectively), DOWOCIL® 200 (0.1%-0.5%), and so forth.

As indicated above, this invention relates to a process for producing a ceramic article which comprises:

(i) preparing an alkoxylation product by contacting an organic compound having at least one active hydrogen with an alkylene oxide in the presence of a catalytically effective amount of an alkoxylation catalyst under alkoxylation conditions;

(ii) preparing a mixture of one or more block polymers characterized by an ABCBA structure by contacting said alkoxylation product with an epoxide in the presence of a catalytically effective amount of a catalyst;

(iii) forming a aqueous slurry comprising water, a ceramic material, clay, a dispersant and the mixture of one or more block polymers characterized by an ABCBA structure as a binder;

(iv) reducing the water content of the slurry until the slurry forms a bonded mass of ceramic material; and

(v) firing the bonded mass of ceramic material at a temperature sufficient to form said ceramic article.

Steps (i)-(iv) have been discussed hereinabove. In accordance with step (v) of the process of this invention, the bonded mass of ceramic material is fired at a temperature sufficient to form the ceramic article. The firing procedure can be accomplished by conventional procedures well known in the art. Often, the firing temperatures range from about 500°C to about 2000°C, preferably from about 1000°C to about 1500°C.

It will be apparent to those skilled in the art that numerous changes and modifications can be made in the preferred embodiments of the invention discussed above without departing from the scope of the invention. Accordingly, the whole of the foregoing description is to be construed in an illustrative and not in a limitative sense, the scope of the invention being defined solely by the appended claims.

## Claims

1. A ceramic composition comprising, on a solids basis, (i) from about 80 to about 98 percent by weight of a ceramic material, (ii) from about 0.1 to about 10 percent by weight of clay and a dispersant and (iii) from about 1 to about 10 percent by weight of one or more block polymers characterized by an ABCBA

structure as a binder.

**2.** The ceramic composition of claim 1 wherein the one or more block polymers characterized by an ABCBA structure are comprised of:

(1) A blocks or segments which can be represented as follows:

$[R_{20}\text{-}]$

wherein $R_{20}$ is the same or different and is an organic residue of an organic compound having at least one active hydrogen;

(2) B blocks or segments which can be represented as follows:

$[\text{-}CHR_{21}\text{ - }CHR_{22}O\text{-}]_m$

wherein $R_{21}$ and $R_{22}$ are the same or different and are hydrogen or alkyl (including hydroxy- and halo-substituted alkyl) and m is an integer of at least 1; and

(3) a C block or segment which can be represented as follows:

$[\text{-}R_{23}\text{-}]$

wherein $R_{23}$ is an organic residue of an epoxide containing two or more epoxy groups; and wherein the one or more block polymers characterized by the ABCBA structure have an average molecular weight of from about 500 to 10,000.

**3.** The ceramic composition of claim 2 wherein each terminal oxy moiety of the B block or segment is individually connected to the terminal alkylene moiety of the C block or segment through a monovalent bond to form an oxyalkylene group and each terminal alkylene moiety of the B block or segment is individually connected to the terminal oxy moiety of the A block or segment through a monovalent bond to form an oxyalkylene group.

**4.** The ceramic composition of claim 2 wherein $R_{20}$ is an organic residue of an alcohol comprising a dihydric, aliphatic alcohol having from 1 to about 20 carbon atoms.

**5.** The ceramic composition of claim 2 wherein the epoxide is selected from bis(epoxyalkyl)cycloalkanes, bis(epoxycycloalkyl)ethers, bis(epoxyalkoxy)benzenes and bis(epoxyalkoxyphenyl)alkanes.

**6.** The ceramic composition of claim 2 wherein the A and B blocks or segments together represent the organic residue of a fatty alcohol ethoxylate.

**7.** The ceramic composition of claim 6 wherein the fatty alcohol ethoxylate has a narrow distribution of alkoxylate species.

**8.** The ceramic composition of claim 6 wherein the fatty alcohol ethoxylate has an average molecular weight of from about 250 to about 3,000.

**9.** The ceramic composition of claim 1 further comprising one or more alkoxylation products which comprise from about 1 to about 25 weight percent or greater of the total weight of the ceramic composition.

**10.** The ceramic composition of claim 1 in the form of a spray-dried powder.

**11.** The ceramic composition of claim 1 in the form of an aqueous slurry having a total solids content of from about 60 to about 85 percent by weight, wherein the weight of water in the slurry is not more than about twice the weight of the one or more block polymers characterized by an ABCBA structure therein.

**12.** A process for producing a bonded mass of ceramic material, which process comprises forming an aqueous slurry comprising water, a ceramic material, clay, a dispersant and one or more block

polymers characterized by an ABCBA structure as a binder, thereby forming an aqueous slurry having a total solids content of from about 60 to about 84 percent by weight, and reducing the water content of the slurry until the slurry forms the bonded mass of ceramic material.

**13.** The process of claim 12 wherein the slurry is formed into droplets and spray-dried so that the bonded mass comprises a substantially spherical granule of ceramic material.

**14.** The process of claim 12 wherein said slurry is placed in a mold and allowed to remain in the mold until the solids in the slurry settle, thereby producing the bonded mass of ceramic material, and thereafter the water separating from the slurry as a result of the settling is removed from the bonded mass.